**Europäisches Patentamt**

**European Patent Office**

**Office européen des brevets**

(11) Veröffentlichungsnummer: **0 476 354 A2**

# EUROPÄISCHE PATENTANMELDUNG

(21) Anmeldenummer: **91114203.2**

(51) Int. Cl.5: **B03D 1/02**, C01F 11/46

(22) Anmeldetag: **24.08.91**

(30) Priorität: **17.09.90 DE 4029394**

(43) Veröffentlichungstag der Anmeldung:
**25.03.92 Patentblatt 92/13**

(84) Benannte Vertragsstaaten:
**AT BE DE DK ES GB GR IT NL SE**

(71) Anmelder: **ERZ- UND KOHLEFLOTATION GMBH**
**Herner Strasse 299**
**W-4630 Bochum 1(DE)**
Anmelder: **STEAG AKTIENGESELLSCHAFT**
**Bismarckstrasse 54**
**W-4300 Essen 1(DE)**

(72) Erfinder: **Imhof, Rainer, Dr.**
**Leharweg 23**
**W-4270 Dorsten(DE)**
Erfinder: **Flöder, Dirk**
**Asthowerstrasse 9**
**W-4300 Essen(DE)**
Erfinder: **Winkler, Hermann, Dr.**
**Spiekeroogstrasse 19**
**W-4350 Recklinghausen(DE)**
Erfinder: **Deuster, Dieter**
**Bismarckstrasse 13**
**W-4010 Hilden(DE)**

(54) **Verfahren und Anlage zur Aufbereitung einer bei der Rauchgasentschwefelung anfallenden Wäschertrübe.**

(57) Die Aufbereitung einer bei der Rauchgasentschwefelung in einem Rauchgaswäscher anfallenden, mit Begleitstoffen wie Gips, Metalloxiden, insbesondere Eisenoxid, sowie Kohlenpartikeln, Ruß- und/oder Aschepartikeln beladenen Wäschertrübe gelingt in einfacher Weise gemäß der Erfindung durch

- eine wenigstens zweistufige Gipsflotation mit in Reihe geschalteten Flotationszellen (1, 2), wobei der Trübeablauf des Wäschers (10) als Trübezulauf (14) an die erste Flotationszelle (1) angeschlossen ist;
- die Konzentratausträge (5, 6) der beiden Flotationszellen (1, 2) sind in einer gemeinsamen Leitung (7) zusammengeführt, die an den Vorlauf (8) eines ersten Hydrozyklons (9) angeschlossen ist;
- den beiden ersten Flotationszellen (1, 2) ist in Reihe eine dritte Flotationszelle (3) nachgeschaltet, in deren Trübezulauf (14) der Flotationsabgang (12) der zweiten Flotationszelle (2) und der Überlauf (13) des ersten Zyklons (9) mit einer gemeinsamen Leitung einmündet.

FIG.1

Die Erfindung betrifft ein Verfahren und eine Anlage zur Aufbereitung einer bei der Rauchgasentschwefelung in einem REA-Wäscher anfallenden, mit Begleitstoffen wie Gips, Metalloxiden, insbesondere Eisenoxiden, sowie Kohlenpartikeln, Ruß- und/oder Aschepartikeln beladenen Wäschertrübe, durch Flotation. Gleichzeitig ermöglicht die Flotation die Minimierung des Feststoffes im Abwasser.

Die Rauchgasreinigung ist ein entscheidener Kostenfaktor beim Bau und Betrieb von Großfeuerungsanlagen. In Rauchgasentschwefelungsanlagen (REA) fallen große Suspensionsmengen an, die erhebliche Anteile an Gips ($CaSO_4$) sowie Verunreinigungen z. B. Kohlenstoffpartikel infolge unvollständiger Verbrennung und Flugstäube bzw. Hydroxyde enthalten. Sowohl Kohlenstoffpartikel als auch Hydroxyde vermindern selbst in kleinen Mengen den Weißgrad des Gipses beträchtlich, wobei berücksichtigt werden muß, daß industrielle Abnehmer von Gips einen Weißgrad größer als 70 %, vorzugsweise sogar größer als 80 % verlangen. Die Reinigung eines in der REA-Wäscher-Suspension enthaltenen, stark verunreinigten Gipses war jedoch bisher bei vertretbarem Aufwand nicht erreichbar.

Bei der Aufbereitung einer REA-Wäscher-Suspension der eingangs genannten Art hat es nicht an Versuchen gefehlt, den in kristalliner Form vorliegenden Gips durch flotative Aufbereitung von den Begleitstoffen zu trennen. Die gipshaltige Suspension wurde zum Beispiel gemäß einem aus der DE-PS 26 18 608 bekannten Verfahren mit Reagenzien versetzt, welche die Begleitstoffe bei Lufteintrag selektiv zum Aufschwimmen brachten. Diese Flotationsversuche ergaben jedoch teilweise sehr lange Einwirk- und Flotationszeiten und erwiesen sich als unwirtschaftlich.

Auch enthält die zur Abwasseranlage geführte Trübe noch einen solchen Anteil an Gips, daß eine Deponierung der bei der Abwasserbehandlung anfallenden Reststoffe nur auf Sonderdeponien mit unwirtschaftlich hohen Kosten möglich ist.

Der Erfindung liegt die Aufgabe zugrunde, ein Verfahren und eine Anlage zur Aufbereitung einer bei der Rauchgasentschwefelung in einem Rauchgaswäscher anfallenden, mit Begleitstoffen wie Gips, Metalloxiden, insbesondere Eisenoxid, sowie Kohlenpartikeln, Ruß- und/oder Aschepartikeln beladenen Wäschertrübe durch Flotation zu verbessern und zu vervollkommnen, um die vorgenannten Schwierigkeiten und technischen Grenzen zu überwinden, dabei insbesondere als Wertstoff einen Reingips von hohem Weißgrad zu gewinnen, der sowohl Ansprüchen der Baustoffindustrie genügt, wie auch als Zuschlagstoff bei der Zementfabrikation Anwendung finden soll, und andererseits die zur Abwasseranlage geführte Trübe soweit von Gipsanteilen zu befreien, daß die verbleibenden Verunreinigungen ohne kostenträchtige zusätzliche Aufbereitung mit wirtschaftlich tragbaren Kosten entsorgt werden können.

Die Lösung der Aufgabe gelingt bei einem Verfahren der im Oberbegriff des Hauptanspruchs genannten Art mit der Erfindung dadurch, daß zur Trennung der Wäschertrübe in Wertstoff wie Gips und deponierbare Abfallstoffe enthaltenden Trübeabgang die Wäschertrübe mit Flotationsreagenzien konditioniert wird, welche die Gipspartikel derart hydrophobieren, daß diese unter Zugabe von feinblasiger Flotationsluft in der Schaumphase konzentriert und aus dem Flotationsprozeß ausgetragen werden.

Überraschenderweise wurde gefunden, daß bei geeigneter Auswahl eines hydrophobierenden Reagenz die im Vergleich zu den sonstigen Feststoffpartikeln großen Gipsteilchen sich an die Bläschen anheften und mit ihnen zur Oberfläche steigen und flotiert werden. Die Feinstpartikel wie Ruß, Kohle, Flugasche, Hydroxyide etc. werden demgegenüber im Flotationsabgang abgeschieden. Auf diese Weise läßt sich gezielt Gips aus der Suspension selektieren und mit wirtschaftlichen Mitteln abscheiden.

Beim Konzentrieren von Gips in der Schaumphase, im Gegensatz zu bekannten Flotationsverfahren mit Konzentration der Begleitstoffe im aufschwimmenden Schaum, wird weiterhin überraschend erreicht, daß die Begleitstoffe einen wesentlich geringeren Restanteil an Gips aufweisen, als dies bei den älteren Flotationsverfahren der Fall war. Damit wird einerseits eine bessere Qualität, d. h. Weißgrad des Gipses und andererseits eine sehr weitgehend von Gipsanteilen gereinigte Resttrübe erzielt.

Darüber hinaus hat sich überraschend gezeigt, daß eine besonders reine Gipsqualität dann erzielt wird, wenn eine Verweilzeit der Wäschertrübe in der Flotationszelle nach Zugabe von Flotationsreagenzien und Luft zwischen 5 und 10 min. eingestellt wird und die Flotationsreagenzien unmittelbar in die Trübezuführung der Flotationszelle, vorzugsweise in den Ansaugbereich der Speisepumpe der Flotationszelle eindosiert werden. Durch Versuche konnte gezeigt werden, daß sowohl Verlängerung als auch Verkürzung der Verweilzeit jeweils eine Verschlechterung der Reinheit bzw. des Weißgrades vom Gips und höhere Restanteile von Gips in der restlichen Trübe ergaben. Die gegenüber älteren Verfahren signifikant um einen Faktor von ca. 0,1 verkürzte Verweilzeit der Trübe in der Flotationszelle ergibt ein hohes Maß an Wirtschaftlichkeit beim Verfahren nach der Erfindung, ebenso wie auch beim Layout der entsprechenden Anlage.

Eine Ausgestaltung sieht vor, daß als Flotationsreagenzien eine Sammler-Schäumer-Kombination, vorzugsweise bestehend aus Fettsäuren, Sulfonaten und nichtionischen Tensiden, in einer Konzentration zwischen 200 g und 600 g, bezogen auf 1.000 (eintausend) kg trockenen Feststoff (Gips) verwendet wird. Mit dieser Sammler-Schäumer-Kombination, gelingt es, den Gips in der Schaumkonzentration zum Aufschwimmen zu bringen, wogegen die Verunreinigungen gedrückt werden und in der restlichen Trübe verbleiben.

Eine Ausgestaltung des Verfahrens sieht vor, daß von dem in der Trübe vorlaufenden Gips etwa 90 bis 95 % in einem vorzugsweise zweistufigen Flotationsverfahren aus der Wäschertrübe ausflotiert, sodann der Gips in eine erste Hydrozyklonstufe eingetragen, darin teilentwässert und eingedickt und zur weiteren Entwässerung einer Filterstufe aufgegeben wird. Dabei wird mit Vorteil von der Maßnahme Gebrauch gemacht, daß der Gips beim Passieren der Filterstufe einem Waschprozeß unterzogen wird. Hierdurch wird dessen Reinheits- und Weißgrad auf einfache und wirtschaftliche Weise optimiert.

Weiter sieht eine Ausgestaltung vor, daß die noch einen Restanteil von Gips sowie Begleitstoffe enthaltende, aus der zweiten Flotationsstufe ausgetragene Trübe mit dem Überlauf der ersten Hydrozyklonstufe vereinigt und in eine weitere, vorzugsweise dritte Flotationsstufe eingetragen und in dieser ein restlicher Gipsanteil ausflotiert, die Trübe in eine zweite Hydrozyklonstufe eingetragen und der aus der dritten Flotationsstufe ausgetragene Gips zusammen mit dem Unterlauf der zweiten Hydrozyklonstufe in den Rauchgaswäscher rezirkuliert und die gereinigte, im wesentlichen nur noch anorganische Abfallstoffe wie Metalloxide, Kohlenpartikel, Ruß- und/oder Aschepartikel enthaltende restliche Trübe aus dem Überlauf des zweiten Hydrozyklons abgestoßen wird.

Sehr vorteilhaft kann dabei im Waschprozeß anfallendes Filtrat und/oder gereinigtes Abwasser in den Zulauf des ersten Hydrozyklons in einer solchen Menge eingeleitet werden, daß damit insgesamt die für den optimalen Arbeitsbereich des Hydrozyklons erforderliche Durchlaufmenge erreicht wird.

Eine Anlage zum Entsorgen einer bei der Rauchgasentschwefelung in einem Rauchgaswäscher anfallenden Wäschertrübe, insbesondere zur Durchführung des Verfahrens nach der Erfindung, umfaßt die im Kennzeichen des Anspruchs 7 angegebenen Anlagenteile.

Zweckmäßige Ausgestaltungen der Anlage sind entsprechend den Merkmalen der Unteransprüche vorgesehen.

Die Erfindung wird in Zeichnungen rein schematisch mittels Verfahrensstammbäumen dargestellt, wobei aus diesen weitere Einzelheiten und Vorteile der Erfindung entnehmbar sind.

Die Zeichnungen zeigen im einzelnen:

Fig. 1: einen Verfahrensstammbaum der Anlage;

Fig. 2: einen geänderten Verfahrensstammbaum der Anlage;

Fig. 3: ein Schaltbild einer Flotationszelle.

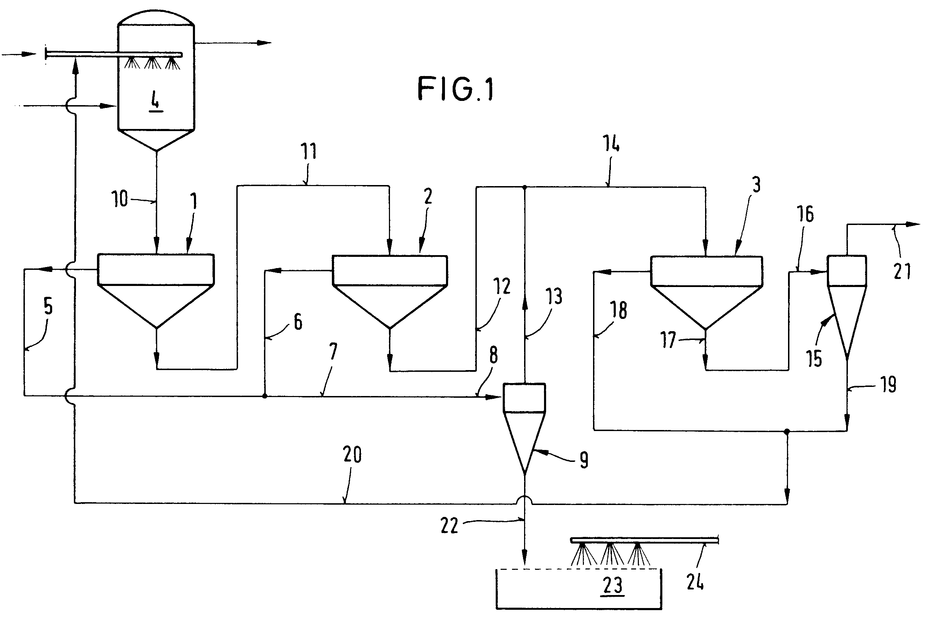

Gemäß Fig. 1 umfaßt die Anlage eine wenigstens zweistufige Gipsflotation mit in Reihe geschalteten Flotationszellen (1 und 2). Der Trübeablauf (10) des Wäschers (4) ist als Trübezulauf an die erste Flotationszelle (1) angeschlossen. Diese ist mit der zweiten Flotationszelle (2) in einer Reihenschaltung mit der Leitung (11) zusammengeschlossen. Die Konzentratausträge (5, 6) der beiden Flotationszellen (1 und 2) sind in einer gemeinsamen Leitung (7) zusammengeführt. Diese ist an den Vorlauf (8) des ersten Hydrozyklons (9) angeschlossen. Darin wird der im Schaumkonzentrat gewonnene Gips durch Zentrifugalwirkung in bekannter Weise von Verunreinigungspartikeln getrennt. Der sowohl durch flotative Sortierung als auch durch Hydrozyklonierung gereinigte Gips wird im Unterlauf des ersten Hydrozyklons (9) mit der Austragsleitung (22) auf ein Bandfilter (23) oder eine Zentrifuge ausgetragen. Das Bandfilter (23) oder die Zentrifuge weist eine Wascheinrichtung (24) auf, welche den Gips nochmals mit Wasser durchspült und dabei sauberwäscht. Er wird danach weiter entwässert und als Wertprodukt gewonnen.

Den beiden ersten Flotationszellen (1 und 2) ist in Reihe eine dritte Flotationszelle (3) nachgeschaltet. In deren Trübezulauf (14) mündet der Abgang (12) der zweiten Flotationszelle (2) und der Überlauf (13) des ersten Hydrozyklons (9) mit einer gemeinsamen Leitung (14) ein. Der Hydrozyklonüberlauf (13), ebenso wie der Abgang (12) der Flotationszelle (2), weisen in der restlichen Trübe konzentrierte Verunreinigungsanteile sowie nur noch geringe Anteile an Gips auf. Diese werden in einer gemeinsamen Leitung (14) zusammengeführt und der dritten Flotationszelle (3) aufgegeben. In der dritten Flotationszelle (3) wird nochmals ein geringer Rest an Gips im Schaumkonzentrat ausgetragen und damit die restliche Trübe bis auf vernachlässigbar geringe Gipsreste gereinigt. Der dritten Flotationszelle (3) ist ein zweiter Hydrozyklon (15) nachgeordnet. Dessen Vorlauf (16) ist mit dem Flotationsabgang (17) der dritten Flotationszelle (3) verbunden. Der Konzentrataustrag (18) der dritten Flotationszelle (3) ist mit dem Unterlauf (19) des zweiten Hydrozyklons (15) in einer gemeinsamen Leitung (20) zusammengeführt. Diese Leitung wird in den Rauchgaswäscher (4) zurückgeführt. Die darin noch enthaltenen geringen Gipsanteile dienen im Rauchgaswäscher (4) vorteilhaft als Kristallisationskeime für den sich darin bildenden Gips. Der Überlauf des zweiten Hydrozyklons (15) ist mit der Leitung (21) aus der Anlage herausgeführt. Dieser Überlauf enthält eine von Gips bis auf geringe Reste in der Größenordnung zwischen 1 und 3 % befreite und im wesentlichen nur noch anorganische Abfallstoffe wie Metalloxide, Kohlenpartikel, Ruß- und/oder Aschepartikel enthaltende Resttrübe. Diese wird mit bekannten und wirtschaftlichen Mitteln in ein Deponieprodukt sowie gereinigtes Abwasser aufbereitet.

Ein wichtiger Aspekt der Erfindung liegt darin, daß die Suspension aus dem Sumpf des REA-Wäschers möglichst direkt dem ersten Flotationsprozeß zugeführt und nicht zwischengelagert wird. Die Suspensionsinhaltsstoffe, beispielsweise die Hydroxyde, sollten auf dem Wege zur Flotation keine chemische Alterung erfahren, wie dies beispielsweise bei Behandlungen durch Wiederaufschäumen oder Nachwaschen der Fall sein kann.

Die erfindungsgemäße Anordnung zur Durchführung des Verfahrens zeichnet sich dadurch aus, daß der Sumpf (40) eines REA-Wäschers (4) unmittelbar mit einem Flotationsapparat (43) verbunden ist.

Ein weiterer Vorteil ergibt sich mit der Erfindung auch dadurch, daß durch die beim Flotationsprozeß eingedüste Luft der chemische Sauerstoffbedarf (CSB) des Abwassers (21) erheblich reduziert wird.

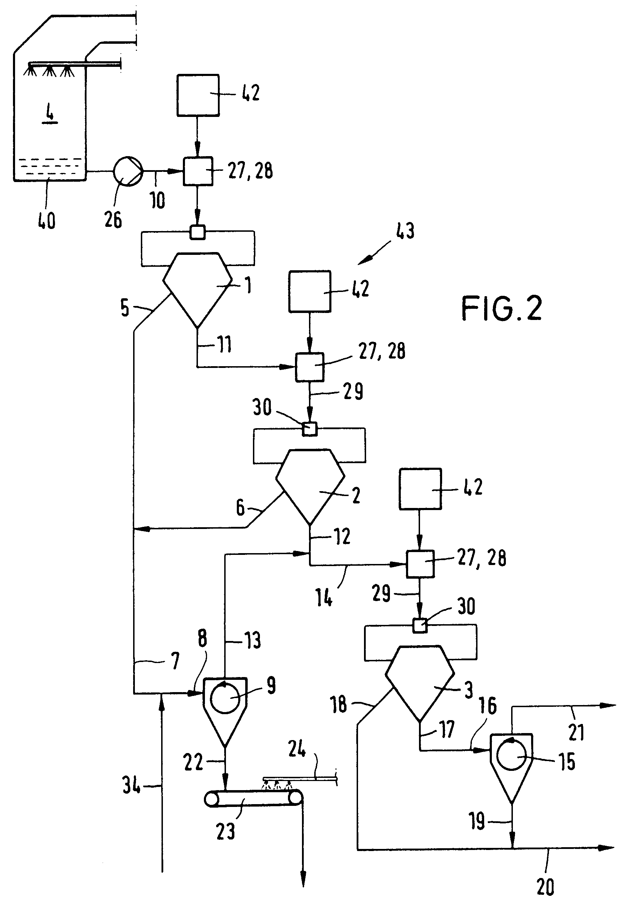

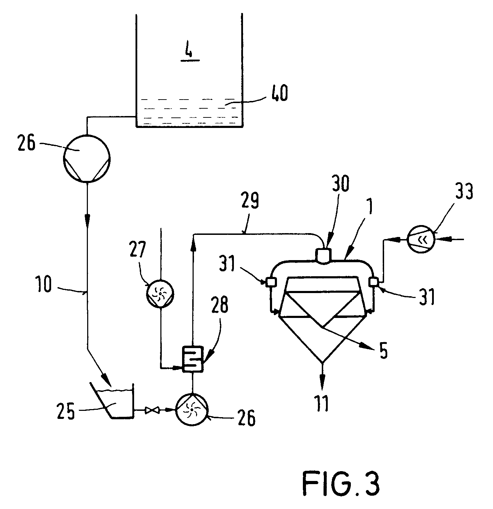

In der Figur 2 ist eine etwas geänderte Konfiguration der Komponenten sowie deren Verknüpfung bei einer erfindungsgemäßen Anlage zum Aufbereiten und Reinigung von Gips aus einer REA-Wäscher-Suspension gezeigt. Der REA-Wäscher (4) hat einen Sumpf (40), in welchem die gipshaltige Suspension aufgefangen wird. Diese Gipssuspension wird von einer Pumpe (26) über eine Leitung (10) zu einer Mischstelle (27, 28) gefördert, an der ein in der Regel organisches Reagenz aus einem Vorratsbehälter (42) zudosiert wird. Mit diesem Reagenz wird die aus dem REA-Wäscher kommende Gipssuspension derart konditioniert, daß die in der Suspension enthaltenen Gipspartikel selektiv hydrophobiert werden. In einer nachfolgenden, vorzugsweise mehrstufigen Flotationsanlage (43) wird die Suspension einer Flotation unterworfen. Dabei werden die hydrophobierten Gipspartikel an Luftbläschen gebunden, die in der jeweiligen Flotationsstufe (1, 2, 3) gemäß Darstellung in der Figur 3 durch bekannte Mittel (31, 33) in die Trübe eingetragen werden. Die an den Luftbläschen haftenden Gipspartikel steigen zur Oberfläche und werden über einen Flotaustrag (5, 6, 18) ausgetragen. Die vom Reagenz nicht benetzten Partikel, wie insbesondere die Kohlenstoff- und Staubpartikel sowie Hydroxyde, werden zusammen mit dem flüssigen Trägermedium über einen Flotationsabgang (11, 12 bzw. 17) aus der jeweiligen Flotationsstufe abgezogen. Die beiden Flotationsstufen (1 und 2) sind in Reihe geschaltet, wobei der Flotationsabgang (11) der ersten Flotationsstufe (1) mit dem Zulauf (29) der folgenden Flotationsstufe (2 bzw. 3) verbunden ist. Die beiden Flotausträge (5 und 6) sind über eine Leitung (7) mit dem Zulauf eines ersten Hydrozyklons (9) verbunden. In der Leitung (7) kann erforderlichenfalls Waschfiltrat des Bandfilters (23) und/oder gereinigtes Abwasser (21) eingespeist werden, um die infolge der Flotation eingedickte Suspension auf eine für den optimalen Arbeitsbereich des Hydrozyklons (16) erforderliche Feststoffkonzentration einzustellen. Durch die Verwendung von Filtrat bzw. gereinigtem Abwasser ergibt sich keine Änderung der Gesamtstoffstrombilanz innerhalb der Rauchgasreinigung. Der in den Flotationsstufen (1 und 2) weitgehend gereinigte Gipsanteil wird im Hydrozyklon (9) abgeschieden und über den Unterlauf (22) dem Vakuumbandfilter (23) bzw. der Zentrifuge aufgegeben. Der das Vakuumbandfilter (23) bzw. der Zentrifuge verlassende Feststoff ist Gips mit einem Weißgrad von deutlich mehr als 70 %, in der Regel mehr als 80 %.

Die den Hydrozyklon (9) über den Überlauf (13) verlassende Flüssigkeit wird beim beschriebenen Ausführungsbeispiel mit der Suspension im Abgang (12) der Flotationsstufe (2) der Flotationsanlage (43) gemischt. Die entstehende Suspension wird in einer dritten Stufe (3) einem weiteren Flotationsprozeß unterzogen. Auch hier werden die in der Suspension noch enthaltenen Gipsteilchen gegebenenfalls durch wiederholte Zugabe eines Reagenz (42) hydrophobiert und das Gipsflotat über den Flotaustrag (18) abgezogen. Die nach diesem dritten Flotationsprozeß verbleibenden Rückstände enthalten nur noch eine relativ geringe Restmenge an Gipspartikeln. Die Rückstandssuspension wird durch den Flotationsabgang (17) der Flotationsstufe (3) abgezogen und zu einem Hydrozyklon (15) überführt. Dessen Überlauf (21) wird fallweise in einer Abwasserbehandlungsanlage aufbereitet. Der Unterlauf (19) des Hydrozyklons (15) wird ebenso wie das gipshaltige Flotat des Flotatausgangs (18) über eine Rückführleitung (20) zum REA-Wäscher (4) zurückgeführt. Gegebenenfalls wird dem ersten Hydrozyklon (9) Verdünnungswasser mit einer Leitung (34) zugeführt.

Ein Schaltbild einer Flotationszelle (1, 2, 3) zeigt Fig. 3. Darin ist der Trübezulauf (10 bzw. 11, 14) mit dem Pumpensumpf (25) und der Kreiselpumpe (26) erkennbar. Weiterhin zeigt Fig. 3 eine Einrichtung (27) zur Dosierung der Reagenzien mit einem nachgeordneten Mischer mit Injektor (28). Die mit Flotationsreagenzien angereicherte Wäschertrübe gelangt über die Leitung (29) in den Trübeteiler (30) und aus diesem über mehrere Verteilerleitungen zu den Begasungsreaktoren (31). Diese sind an einen Luftkompressor (33) angeschlossen. Von den Belüftungsreaktoren (31) gelangt die mit Reagenzien und feinblasiger Luft versetzte Wäschertrübe in die Flotationszelle (1 bzw.

2 und 3). Aus dieser wird mit den Leitungen (5 bzw. 6, 18) im Schaumkonzentrat Gips ausgetragen, während mit Verunreinigungen angereicherte Trübe mit der Leitung (11 bzw. 12) gemäß Figuren 1 und 2 in die jeweils folgende Flotationszelle (2 bzw. 3) eingetragen wird.

Im Rahmen des Erfindungsgedankens sind Abwandlungen möglich. So kann als Flotationsanlage z. B. nur eine Flotationsstufe oder eine Flotationskaskade (43) mit mehr als zwei Flotationsstufen mit entsprechenden Reihenschaltungen vorgesehen sein. Mehrere Hydrozyklone können im Parallelbetrieb arbeiten und jeweils von mehreren Flotationsstufen gespeist werden. Das hydrophobierende Reagenz kann vor oder in den einzelnen Flotationsstufen (1, 2, 3) zugeführt werden. In einer dem Hydrozyklon (15) vorgeschalteten Flotationsstufe (3) können beispielsweise auch Schwermetalle durch selektive Flotation abgeschieden werden. Je größer die Anzahl der in der Flotationskaskade (43) enthaltenen Flotationsstufen ist, um so höher ist die erreichbare Gipsausbeute und um so geringer die zu entsorgende Rückstandsmenge.

## Patentansprüche

1. Verfahren zur Aufbereitung einer bei der Rauchgasentschwefelung in einem Rauchgaswäscher anfallenden, mit Begleitstoffen wie Gips, Metalloxiden, insbesondere Eisenoxid, sowie Kohlenpartikeln, Ruß- und/oder Aschepartikeln beladenen Wäschertrübe durch Flotation, dadurch gekennzeichnet, daß zur Trennung der Wäschertrübe in Wertstoff wie Gips und deponierbare Feststoffe enthaltenden Trübeabgang, die Wäschertrübe mit Flotationsreagenzien konditioniert wird, welche unter Zugabe von feinblasiger Flotationsluft die Gipspartikel derart hydrophobieren, daß diese in der Schaumphase konzentriert und aus dem Flotationsprozeß ausgetragen werden.

2. Verfahren nach Anspruch 1, dadurch gekennzeichnet, daß eine Verweilzeit der Wäschertrübe in der Flotationszelle nach Zugabe von Flotationsreagenzien und Luft zwischen 5 und 10 min. eingestellt wird und die Flotationsreagenzien unmittelbar in die Trübezuführung der Flotationszelle, vorzugsweise in den Ansaugbereich der Speisepumpe der Flotationszelle, eindosiert werden.

3. Verfahren nach den Ansprüchen 1 und 2, dadurch gekennzeichnet, daß als Flotationsreagenzien eine Sammler-Schäumer-Kombination, vorzugsweise bestehend aus Fettsäuren, Sulfonaten und nichtionischen Tensiden, in einer Konzentration zwischen 200 g und 600 g, bezogen auf 1.000 (eintausend) kg trockenen Feststoff (Gips), verwendet wird.

4. Verfahren nach einem oder mehreren der Ansprüche 1 bis 3, dadurch gekennzeichnet, daß die selektive Flotation vorzugsweise mehrstufig durchgeführt wird, wobei der Flotationsabgang einer ersten Flotationsstufe wenigstens einer zweiten Flotation unterworfen und das gipshaltige Flotat wenigstens der beiden ersten Flotationsstufen einem Hydrozyklon zur Abtrennung von Gips zugeleitet und der Flotationsabgang der Flotationskaskade und der Überlauf des Hydrozyklons gemeinsam einem weiteren Flotationsprozeß unterworfen werden, wobei das Flotat des weiteren Flotationsprozesses zum REA-Wäscher zurückgeführt und der Flotationsabgang zur Abwasseraufbereitung geleitet wird.

5. Verfahren nach den Ansprüchen 1 bis 4, dadurch gekennzeichnet, daß von dem in der Trübe vorlaufenden Gips etwa 90 bis 95 % in einem vorzugsweise zweistufigen Flotationsverfahren aus der Wäschertrübe ausflotiert, sodann der Gips in eine erste Hydrozyklonstufe eingetragen, darin teilentwässert und eingedickt und zur weiteren Entwässerung einer Filterstufe aufgegeben und in dieser einem Waschprozeß unterzogen wird.

6. Verfahren nach den Ansprüchen 1 bis 5, dadurch gekennzeichnet, daß beim Waschprozeß anfallendes Filtrat und/oder gereinigtes Abwasser in den Zulauf des ersten Hydrozyklons in einer solchen Menge eingeleitet wird, daß damit insgesamt die für den optimalen Arbeitsbereich des Hydrozyklons erforderliche Durchlaufmenge erreicht wird.

7. Anlage zur Aufbereitung einer bei der Rauchgasentschwefelung in einem Rauchgaswäscher anfallenden, mit Begleitstoffen wie Gips, Metalloxiden, insbesondere Eisenoxiden, sowie Kohlenpartikeln, Ruß- und/oder Aschepartikeln beladenen Wäschertrübe, insbesondere zur Durchführung des Verfahrens nach den Ansprüchen 1 bis 6, dadurch gekennzeichnet, daß diese folgende Anlagenteile umfaßt:
   - eine wenigstens zweistufige Gipsflotation mit in Reihe geschalteten Flotationszellen (1, 2), wobei der Trübeablauf des Wäschers (10) als Trübezulauf (14) an die erste Flotationszelle (1) angeschlossen ist;
   - die Konzentratausträge (5, 6) der beiden Flotationszellen (1, 2) sind in einer gemeinsamen Leitung (7) zusammengeführt, die an den Vorlauf (8) eines ersten Hydrozyklons (9) angeschlossen ist;

- den beiden ersten Flotationszellen (1, 2) ist in Reihe eine dritte Flotationszelle (3) nachgeschaltet, in deren Trübezulauf (14) der Flotationsabgang (12) der zweiten Flotationszelle (2) und der Überlauf (13) des ersten Hydrozyklons (9) mit einer gemeinsamen Leitung (14) einmündet.

8. Anlage nach Anspruch 7, dadurch gekennzeichnet, daß der dritten Flotationszelle (3) ein zweiter Hydrozyklon (15) nachgeordnet und dessen Vorlauf (16) an den Flotationsabgang (17) der dritten Flotationszelle (3) angeschlossen ist, und daß der Konzentrataustrag (18) der dritten Flotationszelle (3) mit dem Unterlauf (19) des zweiten Hydrozyklons (15) in einer gemeinsamen Leitung (20) zusammengeführt und diese Leitung in den Rauchgaswäscher (4) zurückgeführt ist, und daß der die Verunreinigungen führende Überlauf (21) des zweiten Hydrozyklons (15) aus der Anlage herausgeführt ist.

9. Anlage nach den Ansprüchen 7 und 8, dadurch gekennzeichnet, daß der Unterlauf (22) des ersten Hydrozyklons (9) zur Aufgabe von Gipskonzentrat auf einen Bandfilter (23) an dieses angeschlossen und der Bandfilter (23) mit einer Wascheinrichtung (24) für den Gips ausgebildet ist.

10. Anlage nach einem der Ansprüche 7 bis 9, dadurch gekennzeichnet, daß diese unmittelbar an den Sumpf (40) des REA-Wäschers (4) angeschlossen ist.

11. Anlage nach Anspruch 9, dadurch gekennzeichnet, daß anstelle des Bandfilters (23) eine oder mehrere Zentrifugen eingesetzt werden.

FIG.1

FIG.2

FIG.3